# EUROPÄISCHE PATENTSCHRIFT

(11) **EP 0 535 098 B1**
(45) Veröffentlichungstag und Bekanntmachung des Hinweises auf die Patenterteilung: **05.10.1994**
(21) Anmeldenummer: 91911872.9
(22) Anmeldetag: 26.06.1991
(51) Int. Cl.: F16F 15/32

(54) **AUSGLEICHS-GEWICHT ZUM AUSWUCHTEN VON DREHENDEN BAUTEILEN**
BALANCE WEIGHT FOR BALANCING ROTATING COMPONENTS
POIDS D'EQUILIBRAGE DE PIECES ROTATIVES

(30) Priorität: 26.06.1990 DE 9007096 U; 01.10.1990 DE 9013697 U
(43) Veröffentlichungstag der Anmeldung: 07.04.1993
(73) Patentinhaber: NUOVAKAUTSCHUK GmbH, 80796 München (DE)
(72) Erfinder: SCHLOEGL, Johann, D-80796 München (DE)
(74) Vertreter: Kuhnen, Rainer Andreas, Dipl.-Ing.
(86) Internationale Anmeldenummer: EP9101194
(87) Internationale Veröffentlichungsnummer: WO9200471

(56) Entgegenhaltungen:
- EP-A- 0 015 640
- WO-A-87/00121
- DE-A- 1 605 584
- DE-U- 7 920 660
- US-A- 3 960 409

## Beschreibung

Die Erfindung bezieht sich auf ein Ausgleichs-Gewicht zum Auswuchten von drehenden Bauteilen, insbesondere von Fahrzeug-Reifen, gemäß dem Oberbegriff des Patentanspruchs 1.

Ausgleichsgewichte dieser Art sind vielfältig bekannt. Ein Ausgleich-Gewicht mit den Merkmalen des Oberbegriffs des Patentanspruchs 1 ist beispielsweise in dem Dokument DE-U 79 20 660 beschrieben. Derartige Ausgleichsgewichte werden wie folgt gehandhabt:

Im Auswuchtgerät für das drehende Bauteil, beispielsweise für einen Rotor oder einen Kraftfahrzeugreifen, wird durch einen Probelauf ermittelt, an welcher Stelle des Rotorumfangs ein Ausgleichsgewicht vorbestimmter Masse anzuordnen ist, um die Unwucht zu beseitigen. Es wird dann ein Ausgleichsgewicht mit der erforderlichen Masse ausgewählt, die abnehmbare Schutzschicht abgezogen und das Gewicht fest mit einer Oberfläche des auszuwuchtenden Bauteils verklebt. Beim Auswuchten von Kraftfahrzeugreifen ist diese Fläche vorzugsweise die radial nach innen weisende Ringfläche der Kraftfahrzeug-Felge.

Mit dem Ausgleichsgewicht gemäß dem oben erwähnten Dokument DE-U 79 20 660 wird durch eine über den Gewichtkörper hervorstehende Abziehfahne der Schutzschicht die Handhabung des Ausgleichgewichts zwar verbessert. Bei den Ausgleichsgewichten dieser bekannten Bauart zeigt sich allerdings der folgende Nachteil:

Während bei Ausgleichsgewichten, die formschlüssig zwischen Reifen und Felge unter Zuhilfenahme einer metallischen Befestigungslasche eingetrieben werden, die Möglichkeit besteht, die Lage zu korrigieren, ist dies bei verklebten Ausgleichsgewichten nicht mehr möglich. Um die durch Klebung zu positionierenden Ausgleichsgewichte wirtschaftlich einsetzen zu können, sind hochpräzise arbeitende Auswuchtmaschinen und ggf. Montage-Hilfseinrichtungen erforderlich, um von vornherein auszuschließen, daß das von der Schutzschicht befreite Ausgleichsgewicht an einer falschen Stelle positioniert wird. Denn eine Wiederverwendung eines bereits einmal verklebten Ausgleichsgewichts ist nicht mehr möglich, ohne Gefahr zu laufen, daß das Ausgleichsgewicht bei hohen Drehzahlen abgesprengt wird.

Der Erfindung liegt deshalb die Aufgabe zugrunde, ein Ausgleichsgewicht der eingangs beschriebenen Art zu schaffen, das auch unter Einsatz weniger präzise arbeitender Auswucht-Hilfsmittel wirtschaftlich eingesetzt werden kann. Darüber hinaus soll das Ausgleichsgewicht so beschaffen sein, daß die Lagerhaltung wesentlich vereinfacht wird.

Diese Aufgaben werden durch die Merkmale des Patentanspruchs 1 gelöst. Erfindungsgemäß erfolgt eine neuartige Unterteilung der Klebeschicht des Ausgleichs-Gewichts in der Weise, daß wahlweise eine Probe-Heftfläche durch Abziehen eines separaten Schutzschicht-Streifens freigelegt wird. Dies eröffnet die Möglichkeit, das Ausgleichs-Gewicht an einer durch die verwendeten Auswuchthilfsmittel für optimal erkannten Stelle des auszuwuchtenden Bauteils probeweise anzuheften. Die Erfindung beruht hierbei auf der Erkenntnis, daß sich bereits eine Probe-Heftfläche, die lediglich einen Bruchteil der gesamten Klebefläche ausmacht, dann ohne weiteres für einen sicheren weiteren Probelauf des auszuwuchtenden Bauteils unter Einsatzbedingungen eignet, wenn sich die Probe-Heftfläche über die gesamte Länge des Metallstreifens erstreckt. Insbesondere beim Auswuchtvorgang von Kraftfahrzeugreifen, bei dem das Ausgleichsgewicht an die radial nach innen weisende Ringfläche der Felge geklebt wird, reicht zur ausreichend sicheren Vorpositionierung des Ausgleichsgewichts eine Probe-Klebefläche aus, die lediglich einen kleinen Bruchteil der Gesamt-Klebefläche in Anspruch nimmt. Es hat sich gezeigt, daß bereits ein Flächenverhältnis von Probe-Heftfläche zu Gesamt-Klebefläche im Bereich zwischen 2 % und 10 % vollkommen ausreichend ist, um das Ausgleichsgewicht in einem weiteren Probelauf mit Nenn-Drehzahl sicher festzuhalten.

Sollte es sich nach zumindest einem weiteren Probelauf ergeben, daß eines oder mehrere Ausgleichsgewichte versetzt bzw. hinsichtlich ihrer Masse verändert werden müssen, so sind die bereits vorgehefteten Ausgleichsgewichte nach wie vor verwendbar. Sollte der Probelauf ergeben, daß die Ausgleichsgewichte an der richtigen Stelle sitzen, so kann die Rest-Schutzschicht mühelos abgezogen werden, indem von der geringen, elastischen Verformbarkeit der bereits freigelegten Probe-Heftfläche Gebrauch gemacht wird.

Es ergibt sich somit, daß durch die erfindungsgemäßen Maßnahmen ein Ausgleichs-Gewicht bereitgestellt wird, das im ungünstigsten Fall eine um die kleine Probe-Heftfläche verkleinerte, voll belastbare Klebefläche hat. Weil durch die erfindungsgemäße Orientierung der Probe-Heftfläche deren Flächenanteil in bezug zur Gesamt-Klebefläche sehr klein gehalten werden kann, reicht diese Rest-Klebefläche in jedem Falle - selbst bei verunreinigten Oberflächen am auszuwuchtenden Bauteil - aus, um für eine sichere Positionierung des Ausgleichs-Gewichts zu sorgen, zumal die bereits benutzte Heftfläche immer noch eine gewisse Klebekraft besitzt.

Die Handhabung des Ausgleichs-Gewichts wird durch die erfindungsgemäße Ausbildung nicht erschwert. Weil die Unterteilung der Schutzschicht in Längsrichtung des Auswuchtstreifens vorgenommen wird, ergibt sich eine seitliche Zugänglichkeit der Schutzschicht-Bereiche von beiden Seiten. Das Ausgleichs-Gewicht wird deshalb vorzugsweise nach dem Entfernen des die Probe-Heftfläche abdeckenden Schutzschicht-Teilstreifens so am auszuwuchtenden Bauteil vorgeheftet, daß der verbleibende Schutzschicht-Teilstreifen leicht zugänglich bleibt. Nach dem erfolgten Probelauf kann somit der noch am Ausgleichs-Gewicht verbliebene Schutzschicht-Teilstreifen ggf. nach einer geringfügigen Kippbewegung des Metallstreifens erfaßt und abgezogen werden, wonach die endgültige Verbindung zwischen Ausgleichs-Gewicht und drehendem Bauteil hergestellt wird.

Die erfindungsgemäße Neugestaltung des Ausgleichs-Gewichts schafft sogar die Voraussetzung dafür, das Ausgleichs-Gewicht in seiner Masse zu verkleinern, falls sich dies nach einem weiteren Testlauf des drehenden Bauteils bzw. des Rotors als erforderlich erweisen sollte. Das Ausgleichs-Gewicht kann hierzu entweder wieder abgenommen werden, so daß ein Bruchteil der maximal zur Verfügung stehenden Gesamt-Klebefläche verloren geht, wonach der Metallstreifen um eine vorbestimmte Länge gekürzt wird. Es ist jedoch auch möglich, diese Verkürzung des Ausgleichs-Gewichts unter Beibehaltung der Heftung am Bauteil vorzunehmen und anschließend den Rest-Schutzschicht-Streifen abzuziehen. Durch die erfindungsgemäßen Maßnahmen kann somit selbst mit weniger genau arbeitenden Auswuchtmaschinen bzw. mit Maschinen, die die Lage und die Masse des erforderlichen Ausgleichs-Gewichts mit nicht so hoher Präzision anzeigen können, ein Präzisions-Auswuchtvorgang durchgeführt werden, wobei sich der zusätzliche Vorteil ergibt, daß mit einem Minimum an Ausgleichs-Gewichten gearbeitet werden kann.

Mit einem Ausgleichs-Gewicht in der Ausgestaltung nach Patentanspruch 8 ergibt sich eine weitere Verbesserung der Wirtschaftlichkeit des Einsatzes von verklebten Ausgleichs-Gewichten. Die quer zur Längsrichtung des Metallstreifens verlaufenden Kerben, die vorzugsweise in einem solchen, vorbestimmten Abstand zueinander angeordnet sind, daß jeweils Gewichts-Abschnitte vorbestimmter Masse, beispielsweise von 5 g, definiert werden, bilden zum einen Soll-Biegestellen, die das Anheften bzw. Ankleben der Ausgleichs-Gewichte an gekrümmten Oberflächen, beispielsweise an der konkav gekrümmten Innenoberfläche einer Kraftfahrzeugfelge vereinfachen, und zum anderen Soll-Trennstellen zum Ablängen der Ausgleichs-Gewichte entweder vor der Montage oder im angehefteten Zustand nach dem Probelauf. Es ist dementsprechend möglich, die Ausgleichs-Gewichte in Streifenform auszubilden und somit mit einem einzigen Einheits-Gewichts-Streifen zu arbeiten.

Die Ausgestaltung gemäß Patentanspruch 8 hat den besonderen Vorteil, daß sich beim Ablängen des Metallstreifens zur Herstellung sich beim Ablängen des Metallstreifens zur Herstellung eines Ausgleichs-Gewichts vorbestimmter Masse an den Handgriffen zur Probeheftung bzw. zur endgültigen Anklebung des Ausgleichs-Gewichts am auszuwuchtenden, drehenden Bauteil nichts ändert. Dies eröffnet in vorteilhafter Weise die Möglichkeit, die Ausgleichs-Gewichte in Streifenform bzw. Bandform von einer Vorratstrommel abzuziehen, wobei ggf. Vorratsstreifen unterschiedlicher Breite vorgesehen sind, um unterschiedlich große Massen pro Längeneinheit unterzubringen.

Vorteilhafte Weiterbildungen der Erfindung sind Gegenstand der Unteransprüche.

Wenn die Schutzschicht im Übergangsbereich zur Probe-Heftfläche eine Längs-Perforation aufweist, ergibt sich eine besonders einfache Herstellung des Ausgleichs-Gewichts.

Die erfindungsgemäße Gestaltung des Ausgleichs-Gewichts eröffnet darüber hinaus die Möglichkeit, selbst dann, wenn die Schutzschicht zur Vereinfachung des Abziehens und zur Ausbildung einer Abziehfahne über die Klebefläche vorsteht, möglichst viel Schutzschichtfläche einzusparen. Denn die Schutzschicht steht in der Weiterbildung nach Patentanspruch 5 in diesem Fall auf beiden Längsseiten über die Klebeschicht vor. Es steht somit am Ausgleichs-Gewicht eine verhältnisraäßig große Strecke für das Ansetzen beispielsweise des Daumens am Schutzschicht-Streifen zur Verfügung, so daß das Vorstandsmaß erheblich reduziert werden kann, ohne dadurch das Ablösen des Schutzschicht-Streifens zu erschweren. Um das Ergreifen des am vorgehefteten Ausgleichs-Gewichts verbleibenden Schutzschicht-Streifens zu erleichtern, ist es von Vorteil, das Vorstandsmaß des Haupt-Schutzschichtstreifens größer zu halten, als dasjenige des zuvor abgezogenen, die Probe-Heftfläche abdeckenden Teilstreifens.

Insbesondere dann, wenn die Klebeschicht zumindest im Bereich der Probe-Heftfläche auf einem Elastomer-Trägerkörper aufgebracht ist, kann die Elastizität der Klebeschicht in vorteilhafter Weise dazu genutzt werden, das angeheftete Ausgleichs-Gewicht um die Probe-Heftfläche geringfügig zu verschwenken, damit das Ablösen des noch am Ausgleichs-Gewichts verbliebenen Schutzschicht-Reststreifens vereinfacht wird.

Für den Fall, daß die Klebeschicht auf seiten der Probe-Heftfläche um ein vorbestimmtes Maß seitlich über die Längskante des Metallstreifens vorsteht, kann die im ungünstigsten Fall etwas verringerte bzw. entwertete Klebefläche weiter vermindert werden. Mit anderen Worten, die Trennstelle zwischen Probe-Heftfläche und Rest-Klebefläche kann mit dieser Weiterbildung näher an die Längskante des Metallstreifens rücken, so daß selbst beim erneuten Verkleben des Ausgleichs-Gewichts nur ein sehr kleiner Bruchteil der Klebefläche verloren geht bzw. hinsichtlich der Haftkraft eingeschränkt wird, wobei das Abziehen des Gewichts gleichzeitig vereinfacht wird.

Um die Probeverklebung zu vereinfachen und sicherer zu gestalten, ist es von Vorteil, wenn geeignete Maßnahmen getroffen werden, damit die Probe-Heftfläche gegenüber der übrigen Klebefläche um ein vorbestimmtes Maß erhaben ist. Nach dem Abziehen der Schutzschicht im Bereich der Probe-Heftfläche kommt letztere dann im wesentlichen bündig mit der unteren Oberfläche der verbleibenden Schutzschicht zu liegen. Es kann mit verhältnismäßig geringen Kräften dafür gesorgt werden, daß ein fester Klebekontakt im Bereich der Probe-Heftfläche bereitgestellt wird.

Auf besonders einfache und zuverlässige Art und Weise kann das Vorstehen der Probe-Heftfläche mit der Weiterbildung gemäß Patentanspruch 14 gewährleistet werden. Es ist jedoch auch möglich, die Klebeschicht im Bereich der Probe-Heftfläche zu verstärken.

Eine zusätzliche Verbesserung bei der Handhabung des Ausgleichs-Gewichts ergibt sich mit der Ausgestaltung gemäß Patentanspruch 15. Es hat sich gezeigt, daß bei verklebten Ausgleichs-Gewichten regelmäßig besonders schwierige Arbeiten erforderlich sind, um nach einem Pneu-Wechsel, der regelmäßig ein erneutes Auswuchten erfordert, bereits vorhandene Ausgleichs-Gewichte zu entfernen. Die Klebeverbindungen sind mit den heute auf dem Markt befindlichen Klebstoffen derart belastbar, daß die Haftfähigkeit zwischen Klebstoff und dem auszuwuchtenden Bauteil die Zugfestigkeit der Klebeschicht übersteigt. Beim Ablösen des Ausgleichs-Gewichts bleibt deshalb in der Regel entweder ein Teil des Klebstoffs zurück oder die Klebeschicht reißt möglicherweise im Bereich der mittleren Trägerstruktur, beispielsweise in der Ausbildung eines Elastomer-Trägerkörpers, in der Mitte durch. Es sind dann zeitaufwendige Arbeiten durchzuführen, um die Oberfläche des auszuwuchtenden Bauteils von den Rückständen der Klebeschicht zu befreien.

Eine weitere Aufgabe der vorliegenden Erfindung besteht deshalb darin, ein Ausgleichs-Gewicht der eingangs beschriebenen Art derart weiterzubilden, daß die oben erwähnten zeitraubenden Handgriffe beim erneuten Wiederabnehmen des Ausgleichs-Gewichts entfallen können.

Diese Aufgabe wird durch ein Ausgleichs-Gewicht mit den Merkmalen des Patentanspruchs 15 gelöst. Es hat sich herausgestellt, daß die Netzstruktur aus Fäden oder Fasern selbst dann, wenn sie sehr dünn und verhältnismäßig grobmaschig aufgebaut ist, zuverlässig in der Lage ist, der Klebeschicht an der für das Ablösen entscheidenden Stelle die Stabilität zu geben, die ein Einreißen verhindert. Mit anderen Worten, beim Ablösen des Ausgleichs-Gewichts ist mit diesen Maßnahmen dafür gesorgt, daß sich die gesamte Klebeschicht vollständig von der Oberfläche des auszuwuchtenden Bauteils ablöst, so daß umständliche Säuberungsmaßnahmen entfallen können. Der Aufwand bei der Demontage der Ausgleichs-Gewichte wird auf diese Weise erheblich verringert. Die Netzstruktur kann an verschiedenen Stellen der Klebeschicht vorgesehen werden. Es ist auch möglich, die Netzstruktur an mehreren Stellen der Klebeschicht in diese einzugliedern. Wenn beispielsweise zusätzlich eine Netzstruktur nahe der Übergangsstelle zwischen Klebeschicht und Metallstreifen vorgesehen wird, kann nach dem Ablösen des Ausgleichs-Gewichts mit sehr einfachen Handgriffen eine Trennung von Klebeschicht einerseits und Metallstreifen andererseits vorgenommen werden, so daß die Einzelbestandteile des Ausgleichs-Gewichts leichter einem Recycling-Prozeß zugeführt werden können.

Die Netzstruktur ist vorzugsweise als Faden- oder Fasergelege ausgebildet, wobei die Knotenpunkte durch Stoff-, Reib- bzw. Kraft- oder Formschluß gebildet und stabilisiert werden. Die Netzstruktur kann auch als Geflecht oder Gewirk ausgebildet werden, wobei die spezielle Struktur in Abhängigkeit von der jeweils erforderlichen, anzustrebenden Festigkeit gewählt werden sollte.

Es ist vorzuziehen, die Netzstruktur im wesentlichen parallel zur Klebefläche anzuordnen, da auf diese Weise eine sehr einfache Herstellungstechnik Anwendung finden kann.

Für den Fall, daß die Klebeschicht zwischen den eigentlichen Klebstoff-Beschichtungen eine Trägersubstanz, beispielsweise in Form eines Elastomer- oder Papier-Trägerkörpers aufweist, ist es von Vorteil, die stabilisierende Netzstruktur im unteren Drittel der Trägersubstanz anzuordnen. Auf diese Weise ergibt sich insbesondere dann, wenn ein Trägerkörper auf Elastomer-Basis Verwendung findet, eine besonders innige Verbindung zwischen Netzstruktur einerseits und Klebeschicht andererseits. Vorzugsweise wird das Material der die Netzstruktur bildenden Fäden bzw. Fasern an das Material der Trägerstruktur derart angepaßt, daß ein möglichst inniges Verschmelzen der Materialien zumindest im Kontaktbereich stattfindet.

Es ist jedoch auch möglich, die Netzstruktur im Klebstoff selbst vorzusehen bzw. den Klebstoff mit der Netzstruktur abzudecken. In diesem Fall ist über die lichte Maschenweite der Netzstruktur eine Steuerung der zur Verfügung stehenden Klebefläche vorzunehmen. Mit den heute auf dem Markt befindlichen Kunststoffasern ist es jedoch ohne weiteres möglich, die Maschenweite der Netzstruktur so groß zu halten, daß von der Gesamt-Klebefläche nur ein geringer Bruchteil verloren geht. Auf der anderen Seite kann durch geeignete Anpassung des Werkstoffs der Netzstruktur an den Klebstoff sichergestellt werden, daß der Klebstoff zuverlässig zusammen mit der Netzstruktur von der Oberfläche des auszuwuchtenden Bauteils abgezogen wird.

Es ist darauf zu achten, daß die Materialien der Netzstruktur so gewählt werden, daß sie unter den zu erwartenden Einsatzbedingungen nicht übermäßig altern. Für den Fall des Einsatzes bei Auswucht-Gewichten von Kraftfahrzeugreifen ist es von Vorteil, mit hydrophoben bzw. lipophilen Materialen zu arbeiten. Hierdurch kann die Wasseraufnahme der Klebeschicht wirksam eingedämmt werden und Korrosionserscheinungen werden zuverlässig ausgeschlossen.

Selbstverständlich ist es von Vorteil, die Kett- und Schußfäden der Gewebestruktur bzw. die Lagen der Netzstruktur aus reißfestem Material herzustellen. Um die Festigkeit bzw. die Verstärkungsfunktion der Netzstruktur zusätzlich zu verbessern, ist es von Vorteil, die Orientierung des Netzes an die Haupt-Belastungsrichtung der Klebeschicht beim Abziehen anzupassen. Dies ist Gegenstand des Patentanspruchs 23.

Nachstehend werden anhand schematischer Zeichnungen mehrere Ausführungsbeispiele der Erfindung näher erläutert. Es zeigen:
- Figur 1: einen Teilschnitt durch eine Kraftfahrzeugfelge, die mit dem erfindungsgemäßen Ausgleichs-Gewicht ausgewuchtet werden soll;
- Figur 2: eine Seitenansicht der Felge mit Ausgleichs-Gewicht;
- Figur 3: in vergrößertem Maßstab einen Schnitt gemäß III-III in Figur 2;
- Figur 4: die Einzelheit IV in Figur 3;
- Figur 5: einen schematischen Teilschnitt durch eine weitere Ausführungsform des Ausgleichs-Gewichts;
- Figur 6: eine der Figur 5 entsprechende Schnittansicht einer weiteren Ausführungsform des Ausgleichs-Gewichts;
- Figur 7: eine Ansicht eines Ausgleichs-Gewicht-Streifens von unten;
- Figur 8: eine Ansicht des Ausgleichs-Gewicht-Streifens gemäß XIII in Figur 7;
- Figur 9: eine Teil-Schnittansicht einer weiteren Ausführungsform des Ausgleichs-Gewichts;
- Figur 10: eine schematische Darstellung zur Verdeutlichung der Klebeschicht-Verformung bei der Endmontage des Ausgleichs-Gewichts;
- Figur 11: eine vergrößerte Teil-Schnittansicht einer weiteren Ausführungsform des Ausgleichs-Gewichts;
- Figur 12: eine schematische Teil-Schnittansicht einer Ausführungsform des Ausgleichs-Gewichts, bei dem zusätzliche Maßnahmen ergriffen sind, um das Ablösen ohne Klebstoff-Rückstände zu vereinfachen;
- Figur 13: eine der Figur 12 ähnliche Ansicht einer weiteren Variante des Ausgleichs-Gewichts;
- Figur 14: eine Ansicht des bei der Ausführungsform gemäß Figur 13 verwendeten Gewebeeinsatzes bei Betrachtung von unten;
- Figur 15: eine den Figuren 12 und 13 ähnliche Ansicht einer weiteren Variante des Ausgleichs-Gewichts;
- Figur 16: eine der Figur 15 ähnliche Ansicht einer weiteren Ausführungsform des Ausgleichs-Gewichts;
- Figur 17: einen Schnitt gemäß XVII-XVII in Figur 16; und
- Figur 18: eine der Figur 16 ähnliche Ansicht einer weiteren Ausführungsform des Ausgleichsgewichts.

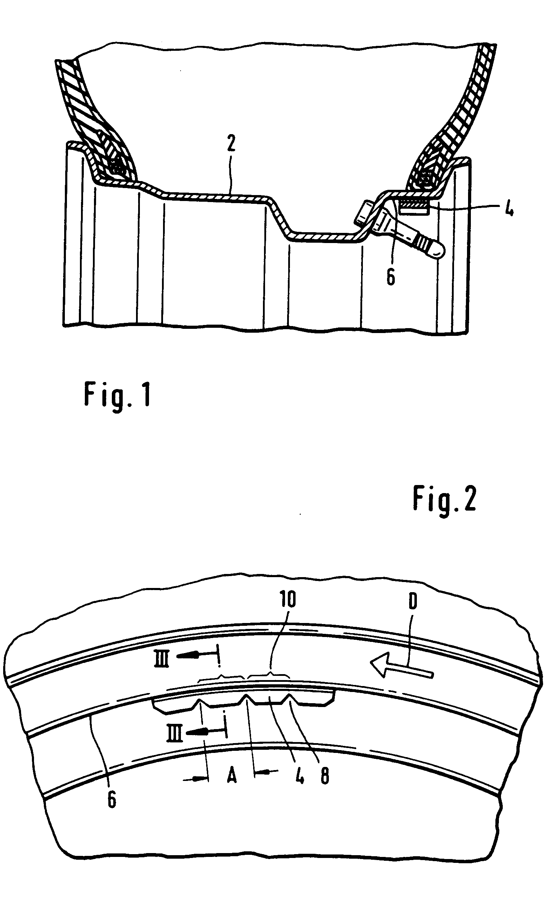

In Figur 1 ist mit dem Bezugszeichen 2 eine Kraftfahrzeugfelge bezeichnet, die unter Zuhilfenahme zumindest eines Ausgleichs-Gewichts 4 ausgewuchtet werden soll. Bei dem Ausgleichs-Gewicht 4 handelt es sich um einen länglichen Metallstreifen, der mit einem radial nach innen weisenden Ringabschnitt 6 der Felge 2 verklebt wird. Die Drehrichtung des Reifens ist mit dem Pfeil D (siehe Figur 2) bezeichnet, so daß über die Masse des Ausgleichs-Gewichts 4 eine Zentrifugalkraft auf die Felge 2 bzw. den Reifen aufgebracht werden kann, die bei richtiger Winkel-Lagezuordnung zur Unwucht und durch geeignete Auswahl der Masse des Ausgleichs-Gewichts vorhandene Unwuchten des Reifens beseitigen kann.

Die Soll-Lage und die Soll-Masse des Ausgleichs-Gewichts werden regelmäßig durch eine Auswuchtmaschine bestimmt, in die der auszuwuchtende Reifen bzw. ein auszuwuchtender Rotor oder ein anderer drehender Formkörper aufgenommen wird, so daß ein Probelauf unter Soll-Einsatzbedingungen, d.h. mit ausreichend hoher Drehzahl durchgeführt werden kann. Die Auswuchtmaschine zeigt anschließend der Bedienungsperson an, an welcher Stelle des Reifenumfangs ein Gewicht von vorbestimmter Masse angeordnet werden soll.

Gewöhnlicherweise wird nach dem Anbringen eines Ausgleichs-Gewichts ein weiterer Testlauf durchgeführt, um sich von der richtigen Anordnung des Ausgleichs-Gewichts zu überzeugen und um andererseits Unwuchten höherer Ordnung zu beseitigen. Um die Voraussetzungen dafür zu schaffen, daß das bereits angebrachte Ausgleichs-Gewicht nicht wertlos wird, falls sich bei weiteren Testläufen heraustellen sollte, daß eine Verschiebung des Ausgleichs-Gewichts bzw. eine Reduzierung der Masse erforderlich ist, ist das Ausgleichs-Gewicht wie nachstehend näher beschrieben ausgebildet.

Man erkennt aus der Darstellung gemäß Figur 2, daß das Ausgleichs-Gewicht von einem gerippten Metallband gebildet ist, wobei als Material hauptsächlich ein Schwermetall wie z. B. Blei oder eine Bleilegierung Anwendung findet. Das Ausgleichs-Gewicht weist auf diese Weise quer zur Längserstreckung verlaufende, im wesentliche V-förmige Kerben 8 auf, die in vorbestimmtem, gleichbleibenden Abstand A zueinander stehen. Durch diese Kerben 8 werden Abschnitte 10 gleicher, vorbestimmter Masse von beispielsweise 5 g bestimmt. Wenn demgemäß die Auswuchtmaschine anzeigen sollte, daß ein Ausgleichs-Gewicht der Masse 20 g erforderlich ist, wird von einem Ausgleichs-Gewicht-Streifen, der beispielsweise auf einer Vorratsrolle aufgewickelt sein kann, eine entsprechende Anzahl von Abschnitten 10 abgetrennt.

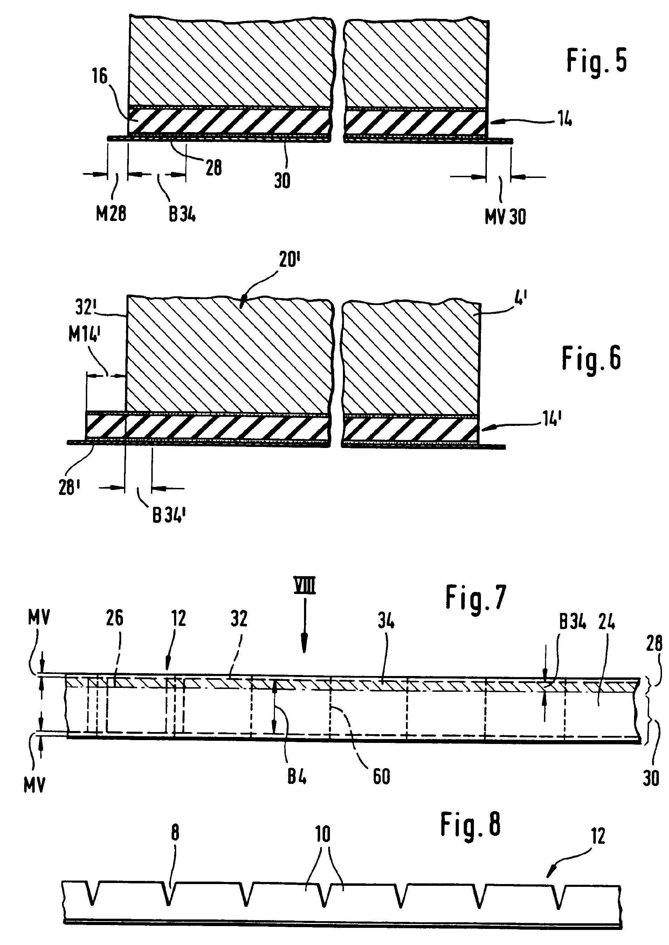

In den Figuren 7 und 8 ist ein Ausschnitt aus einem derartigen Ausgleichs-Gewicht-Streifen 12 gezeigt. Es ist vorzuziehen, die Werkstatt mit Ausgleichs-GewichtStreifen unterschiedlicher Breite auszustatten, damit das Ausgleichs-Gewicht für den Fall, daß größere Massen erforderlich werden, keine allzu große Erstreckung in Umfangsrichtung erhält.

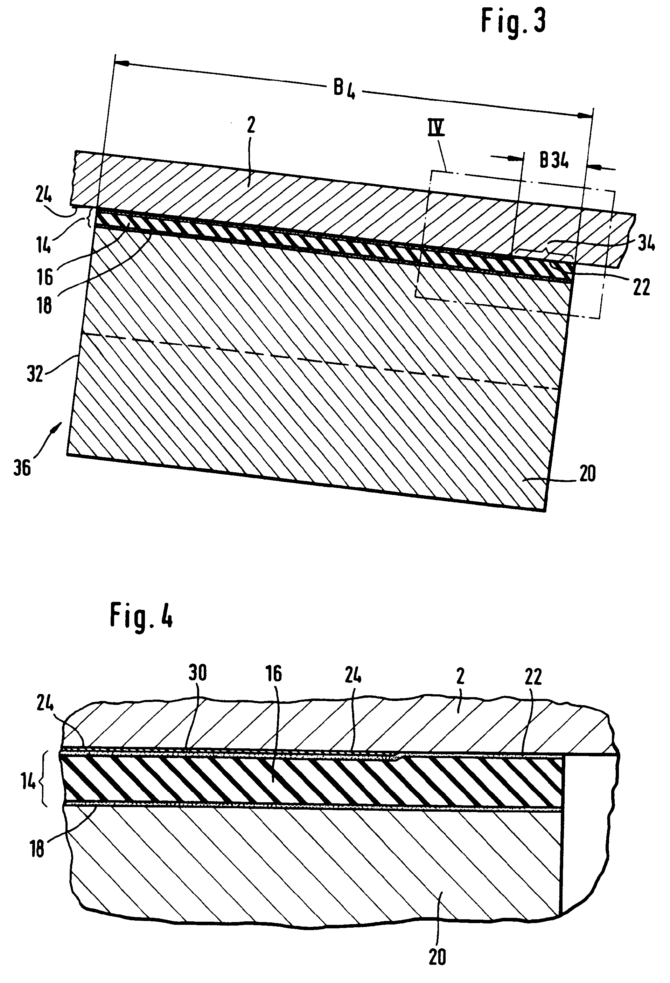

Die Befestigung des Ausgleichs-Gewichts 4 am Ringabschnitt 6 erfolgt unter Zuhilfenahme einer Klebeschicht 14 beispielsweise in Form eines doppelseitigen Klebebandes. Der Aufbau der Klebeschicht 14 ist im einzelnen aus den Figuren 3 und 4 erkennbar. Hierbei ist ein Elastomer-Trägerkörper 16 über eine Klebstoffschicht 18 am Metallstreifen 20 befestigt. Auf der dem Metallstreifen 20 abgewandten Seite ist der Elastomer-Trägerkörper mit einer weiteren Klebstoffschicht 22, die vorzugsweise aus einem Acrylharz-Klebstoff besteht, versehen. Über diese weitere Klebstoffschicht 22 erfolgt die Verklebung mit der Felge 2.

Damit der Ausgleichs-Gewicht-Streifen 12 bzw. das Ausgleichs-Gewicht vor dem Ankleben handhabbar ist, ist die äußere Klebstoffschicht 22 durch eine abziehbare Schutzschicht 24 abgedeckt, die beispielsweise von einer silikonisierten Schutzfolie bzw. papierartigen Folie gebildet ist.

Zum Aufkleben des Ausgleichs-Gewichts 4 wird die Schutzschicht abgezogen, so daß die Klebeschicht 14 freiliegt. Erfindungsgemäß ist allerdings zumindest auf seiten der Schutzschicht eine Unterteilung vorgenommen worden, die nachfolgend näher beschrieben werden soll:

Mit dem Bezugszeichen 26 ist eine Trennstelle bezeichnet, die sich in Längsrichtung des Ausgleichs-Gewicht-Streifens 12 erstreckt. Diese Trennstelle kann beispielsweise von einer Perforation in der Schutzschicht 24 bzw. von einer Soll-Trennstelle bzw. -Bruchstelle der Schutzschicht gebildet sein. Die Trennstelle kann jedoch gleichermaßen durch die gesamte Klebeschicht hindurch verlaufen. Es entstehen auf diese Weise zwei Schutzschicht-Teilstreifen, nämlich ein verhältnismäßig schmaler erster Schutzschicht-Teilstreifen 28 und ein Haupt-Schutzschicht-Streifen 30. Jeder der beiden Streifen 28 und 30 steht seitlich um ein vorbestimmtes Maß MV von einer Seitenfläche 32 des Ausgleichs-Gewichts 4 bzw. des Metallstreifens 20 vor, um das Erfassen der jeweiligen Schutzschicht-Streifen 28 und 30 zu erleichtern. Dieser erfindungsgemäße Aufbau führt zu folgenden Vorteilen bei der Handhabung des Ausgleichs-Gewichts:

Aufgrund der Soll-Trennstelle 26 kann der erste Schutzschicht-Teilstreifen 28 von einem auf eine vorbestimmte Länge zugeschnittenen Ausgleichs-Gewicht 4 separat abgezogen werden, wodurch eine in Figur 7 schraffiert dargestellte Probe-Heftfläche 34 freigelegt wird. Die Probe-Heftfläche 34 nimmt lediglich einen Bruchteil der Gesamt-Klebefläche ein, wobei dieser Bruchteil im Bereich zwischen 5 und 40 %, vorzugsweise im Bereich zwischen 10 und 15 % der Gesamt-Klebefläche liegt. Mit anderen Worten, die Breite B34 der Probe-Heftfläche 34 macht lediglich einen kleinen Bruchteil von etwa 10 bis 15 % der Gesamtbreite B4 aus.

Mit der freigelegten Probe-Heftfläche kann das auf eine vorbestimmte Masse abgelängte Ausgleichs-Gewicht 4 nach einem ersten Probelauf des Rotors bzw. des auszuwuchtenden Bauteils, wie z. B. des Fahrzeugreifens, an die von der Auswuchtmaschine angezeigte Stelle geheftet werden. Dieser Zustand ist in den Figuren 3 und 4 dargestellt. Man erkennt, daß die Heftverbindung lediglich im Bereich der Probe-Heftfläche 34 vorliegt, die von dem noch am Ausgleichs-Gewicht 4 angebrachten Haupt-Schutzschicht-Streifen 30 begrenzt ist. Bei dem gezeigten Ausführungsbeispiel macht die Größe der Probe-Heftfläche 34 etwa 14 % der Gesamt-Klebefläche aus. Dieses Verhältnis wird durch die Beziehung der Breite B34 zur Gesamtbreite B4 des Ausgleichs-Gewichts 4 bestimmt.

Es hat sich gezeigt, daß diese verhältnismäßig kleine Probe-Heftfläche 34 genügt, um das Ausgleichs-Gewicht selbst an Flächen sicher anzubringen, die zur Rotationsachse des auszuwuchtenden Bauteils, die bei der Ausführungsform gemäß Figur 3 eine horizontale Linie darstellt, geneigt sind. In diesem angehefteten Zustand kann ein weiterer Testlauf des Rotors bzw. des Kraftfahrzeugreifens durchgeführt werden. Sollte sich hierbei herausstellen, daß das Ausgleichs-Gewicht noch geringfügig versetzt werden muß, so kann das Ausgleichs-Gewicht mit Leichtigkeit wieder abgenommen werden. Anschließend wird der noch am Ausgleichs-Gewicht verbliebene Schutzschicht-Hauptstreifen 30 abgezogen und eine endgültige Verklebung des Ausgleichs-Gewichts mit dem auszuwuchtenden Bauteil durchgeführt.

Sollte sich herausstellen, daß die Masse des angehefteten Ausgleichs-Gewichts zu groß war, so kann das angeheftete Ausgleichs-Gewicht auf die exakte Länge zugestutzt werden. Das abgetrennte Segment 10 ist dabei nach wie vor verwendbar, da noch ein überwiegender Teil der Gesamt-Klebefläche ohne Einschränkungen zur Verfügung steht.

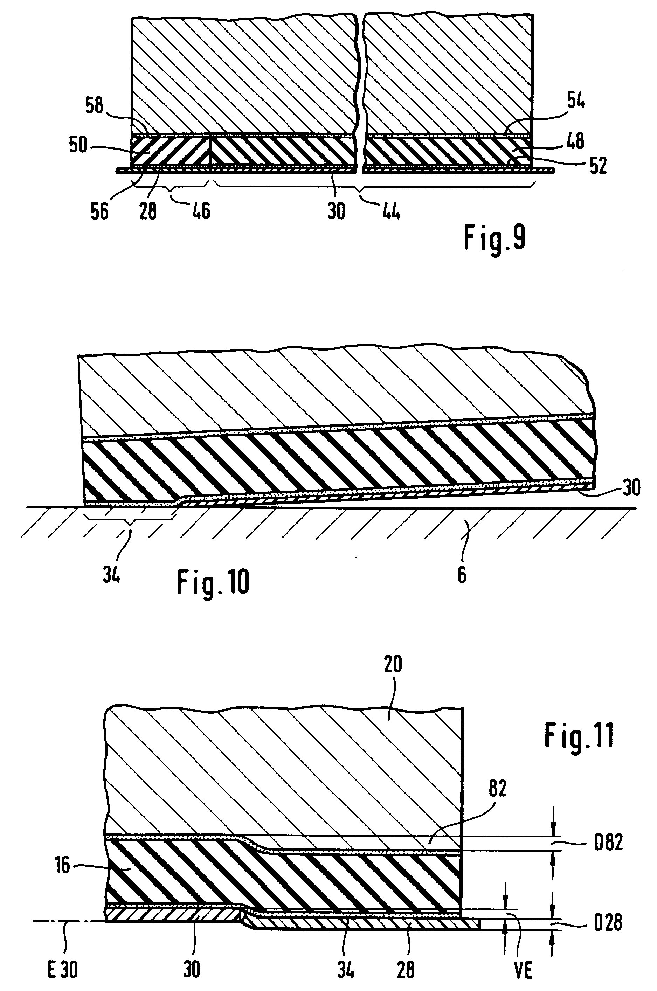

Wenn der Testlauf ergibt, daß die Lage des Ausgleichs-Gewichts nicht verbesserungsbedürftig ist, so erlaubt es die Lage und die Größe der Probe-Heftfläche 34 vorzugsweise unter Ausnützung der Elastizität des Klebeschicht-Trägerkörpers 16, das Ausgleichs-Gewicht 4 durch Erfassen eines äußeren Randbereichs 36 um die Probe-Heftfläche 34 gemäß Figur 10 im Gegenuhrzeigersinn leicht zu verkippen. In diesem Zustand ist es mit Leichtigkeit möglich, den am Ausgleichs-Gewicht 4 verbliebenen Schutzschicht-Hauptstreifen 30 abzuziehen, wobei dieser Vorgang dadurch erleichtert wird, daß dieser Hauptstreifen 30 auf der zugänglichen Seite um das Maß MV seitlich vorsteht. Anschließend wird das Ausgleichs-Gewicht fest gegen den Untergrund, d.h. beim gezeigten Ausführungsbeispiel gegen den Ringabschnitt 6 einer Felge gedrückt, wonach der Montagevorgang des Ausgleichs-Gewichts abgeschlossen ist.

Es ergibt sich somit, daß durch die erfindungsgemäßen Maßnahmen im ungünstigsten Fall, d.h. dann, wenn das vorgeheftete Ausgleichsgewicht abgenommen und an anderer Stelle angebracht werden muß, ein kleiner Bruchteil der maximal zur Verfügung stehenen Klebefläche verlorengeht bzw. eingeschränkt verwendbar wird. Diese Fläche kann jedoch durch die erfindungsgemäße Orientierung der Probe-Heftfläche in Längsrichtung des Ausgleichs-Gewichts 4 selbst bei großen Nenn-Drehzahlen des auszuwuchtenden Bauteils relativ klein gehalten werden.

Figur 5 zeigt einen Querschnitt durch das Ausgleichs-Gewicht 4 vor dem Abziehen des ersten Schutzschicht-Teilstreifens 28. Man erkennt aus dieser Darstellung, daß die Unterteilung der Klebeschicht hier ausschließlich durch den Teilstreifen 28 vorgenommen wird. Im übrigen ist die Klebeschicht 14 über die gesamte Breite des Ausgleichs-Gewichts 4 durchgehend. Figur 5 deutet durch die Masse MV28 und MV30 an, daß das Überstandsmaß der beiden Schutzschicht-Streifen 28 und 30 unterschiedlich sein kann. Es hat sich herausgestellt, daß durch die erfindungsgemäße Orientierung der Abziehfahnen in Form der überstehenden Ränder der Schutzschicht-Streifen das jeweilige Überstandsmaß MV28 bzw. MV30 verhältnismäßig klein gehalten werden kann, ohne hierdurch das Abziehen der einzlnen Streifen zu erschweren.

Mit der Ausführungsform gemäß Figur 6 kann die Breite B34′ der im ungünstigsten Fall verlorenen Probe-Heftfläche 34′ noch verkleinert werden. In diesem Fall ist die Klebeschicht 14 auf der der Probe-Heftfläche 34′ zugewandten Seite über die Randfläche 32′ des Ausgleichs-Gewichts 4′ hinaus verlängert. Bei gleicher Breite des Schutzschicht-Teilstreifens 28′ ergibt sich in diesem Fall eine verringerte Breite B34′ der Probe-Heftfläche im Bereich des Metallstreifens 20′, über die das Anheften am auszuwuchtenden Bauteil erfolgt. Der restliche Teil der Heftfläche liegt seitlich daneben. Es hat sich herausgestellt, daß selbst eine auf diese Weise seitlich verschobene Probe-Heftfläche genügt, um die Heftung ausreichend gut für die nachfolgenden Testläufe auszubilden.

Figur 9 zeigt eine weitere Ausführungsform der Erfindung. Abweichend von den zuvor beschriebenen Ausführungsbeispielen, setzt sich die Trennung der Schutzschicht bis in den Bereich der Klebeschicht fort. Es entsteht dementsprechend eine Haupt-Klebeschicht 44 und eine Heft-Klebeschicht 46 mit jeweils eigenen Elastomer-Trägerkörpern 48 bzw. 50 sowie gesonderten Klebstoffschichten 52, 54 bzw. 56, 58. Diese Ausgestaltung ist zwar herstellungstechnisch aufwendiger, sie eröffnet jedoch die Möglichkeit, die Eigenschaften der Klebeschichten 44 und 46 an die jeweiligen Anforderungen anzupassen. So kann beispielsweise im Bereich der Klebeschicht 46 die Elastizität des Elastomer-Trägerkörpers 50 besonders hoch sein, während im Bereich der Haupt-Klebeschicht 44 eine besondere Klebstoffschicht 52 bzw. 54 zur Anwendung kommt.

Die erfindungsgemäße Unterteilung der Klebefläche in eine Haupt- und Heft-Klebefläche erlaubt eine sehr einfache Herstellung und Lagerhaltung der Ausgleichs-Gewichte. Wie aus den Figuren 7 und 8 ersichtlich, kann ein Ausgleichs-Gewicht-Streifen 12 quasi endlos hergestellt werden. Die Kerben zwischen den entstehenden Gewicht-Segmenten bilden für die Bedienungsperson der Auswuchtmaschine nicht nur einen Anhaltspunkt zur Ablängung eines Ausgleichs-Gewichts vorbestimmter Masse, sondern sie unterstützen auch das satte Anschmiegen der Klebefläche des Ausgleichs-Gewichts selbst an gekrümmte Oberflächen. Vorzugsweise sind im Bereich der Kerben 8 Quer-Perforationen 60 vorgesehen, um eine saubere Abtrennung auf der Schutzschicht 24 beim Ablängen der Ausgleichs-Gewichte Sicherzustellen.

Mit der Ausführungsform gemäß Figur 11 gelingt es, die Probeverklebung des Ausgleichs-Gewichts zu verbessern. Auch bei dieser Ausführungsform sind diejenigen Elemente, die mit den Elementen der zuvor beschriebenen Ausführungsformen gleichwirkend bzw. annähernd gleichwirkend sind, mit gleichen Bezugszeichen gekennzeichnet. Die Besonderheit dieser Ausführungsform liegt darin, daß der Metallstreifen, beispielsweise in der Ausführungsform als Blei-Riegel 20 auf der dem Schutzschicht-Streifen 28 zugewandten Seite einen nach unten vorstehenden, flachen Wulstabschnitt 82 ausbildet, der eine Dicke D82 aufweist, die in etwa der Dicke D28 des Schutzschicht-Teilstreifens 28 entspricht. Diese Ausbildung bewirkt, daß beim Abziehen des Schutzschicht-Teilstreifens 28 zur Bewerkstelligung der Probeverklebung die Probe-Heftfläche 34 nahezu bündig in der Abschlußebene E30 des verbleibenden Schutzschicht-Hauptstreifens 30 zu liegen kommt, so daß ein Andrücken der freigelegten Probe-Heftfläche 34 wesentlich einfacher bewerkstelligt werden kann.

Wesentlich bei der Ausführungsform gemäß Figur 11 ist es dementsprechend, daß die Probe-Heftfläche 34 im freigelegten Zustand, d.h. bei abgezogenem Teilstreifen 28 um ein vorbestimmtes Maß VE von der übrigen Klebefläche vorsteht. Optimale Verhältnisse ergeben sich dann, wenn dieses Maß VE in etwa dem Maß D28 entspricht. Dies kann selbstverständlich auch dann erreicht werden, wenn anstelle des wulstförmigen Streifenansatzes 82 in dem Bereich der Probe-Heftfläche eine Verstärkung des Klebeschicht-Trägerkörpers 16 vorgesehen ist.

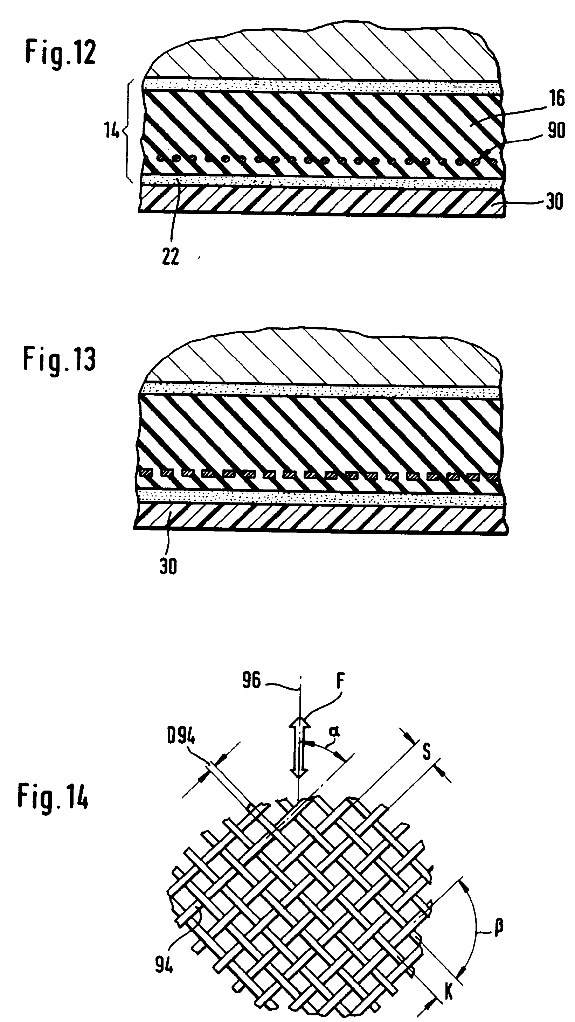

In den Figuren 12 bis 15 sind schließlich noch weitere Varianten des Ausgleichs-Gewichts dargestellt, mit denen die Demontage des Ausgleichs-Gewichts vereinfacht werden kann. Allen diesen Ausführungsformen ist gemeinsam, daß in die Klebeschicht 14 eine stabile und reißfeste Netzstruktur 90 integriert ist, die dafür sorgt, daß beim Abnehmen des Ausgleichs-Gewichts von der Oberfläche des auszuwuchtenden Körpers die gesamte Klebeschicht 14 rückstandsfrei abgelöst wird. Die Netzstruktur 90 ist derart in die Klebeschicht 14 eingebracht, daß sie sich im wesentlichen parallel zur Klebefläche bzw. zur Klebstoffschicht 22 erstreckt. Die Netzstruktur ist vorzugsweise von einem zweilagigen Faden- oder Fasergelege gebildet, es kann jedoch auch ein Geflecht bzw. ein Gewirk Anwendung finden, wobei wesentlich ist, daß sich zwischen der Netzstruktur 90 und der Klebeschicht 14 eine innige Verbindung einstellt und die Knoten der Netzstruktur eine ausreichende Stabilität erhalten, was durch Stoff-, Kraft- und/oder Formschluß erreicht werden kann.

Bei der Ausführungsform gemäß Figur 12 ist die Netzstruktur in den Trägerkörper, beispielsweise in den Elastomer-Trägerkörper 16 der Klebeschicht 14 integriert, und zwar vorzugsweise im unteren Drittel, d.h. in dem Drittel des Elastomer-Trägerkörpers, das dem Abdeck-Hauptstreifen 30 zugewandt ist.

Die Netzstruktur kann unterschiedliche Gestaltung haben. Über die Formgebung der Netz- bzw. Gewebefäden bzw. -fasern kann die Verbindung zum Trägerkörper gesteuert werden. Während bei der Ausführungsform gemäß Figur 12 ein Netz bzw. ein Gewebe mit runden Fasern Verwendung findet, ist bei der Ausführungsform gemäß Figur 13 eine Netzstruktur vorgesehen, bei der die Netzfäden bzw. -fasern im wesentlichen Rechteck-Querschnitt besitzen. Vorzugsweise ist die Querschnittsgestaltung der Fäden der Ausführungsform gemäß Figur 13 so, daß sich die längere Seitenkante der Fäden-Querschnitte parallel zur Klebefläche erstreckt.

Wesentlich für die Gestaltung der Netzstruktur ist es außerdem, daß sich ein reißfestes Netz ergibt, was durch Verwendung hoch-reißfester Fasern sichergestellt werden kann. Vorzugsweise wählt man für die Netzstruktur ein hydrophobes bzw. lipophiles Material, um die Wasseraufnahme der Netzstruktur weitestgehend auszuschließen und Korrosions-Alterungserscheinungen zu verhindern.

Die Wahl des Materials für die Netzstruktur ist darüber hinaus so zu treffen, daß das Gewebe mit handelsüblichen Schneidwerkzeugen, wie z. B. mittels einer Amboßschere, leicht durchgetrennt werden kann. Dies eröffnet die Möglichkeit, das Ausgleichs-Gewicht als Endlos-Streifen bzw. in Stangenform auszuführen und Ausgleichs-Gewichte gewünschter Masse durch Abtrennen herzustellen.

Figur 14 zeigt in vergrößertem Maßstab eine Ansicht einer Netzstruktur, die in der Ausführung als Geflecht - ähnlich einem Gewebeband - in die Klebeschicht 14 eingegliedert ist. Bei dieser Ausführungsform handelt es sich um ein Geflecht aus hoch-reißfesten Fäden. Die Besonderheit dieser Gestaltung liegt darin, daß die Kett- und Schußfäden zur Ausgleichs-Gewicht-Längserstreckung - angedeutet durch die Achse 96 der Laufrichtung des auszuwuchtenden Bauteils (Doppelpfeil F) - im Winkel ALPHA verlaufen. Der Winkel BETA, den Kett- und Schußfäden miteinander einschließen, beträgt im wesentlichen 90°. Durch Variation der Winkel ALPHA und BETA kann der Kraftfluß beim Ablösen des Gewichts optimiert werden. Dies kann gleichfalls dadurch geschehen, daß die Maße K und S, d.h. die Seiten-Abstandsmaße der Kett- bzw. Schußfäden unterschiedlich gehalten bzw. auf die vorstehend erwähnten Parameter abgestimmt werden.

Mit D94 ist die Dicke der Fäden 94 bezeichnet. Über dieses Maß D94 und die Maße K und S kann die lichte Maschenweite der Netzstruktur bestimmt werden. Diese wird so festgelegt, daß sich eine möglichst geringe Schwächung des Elastomer-Trägerkörpers 16 einstellt.

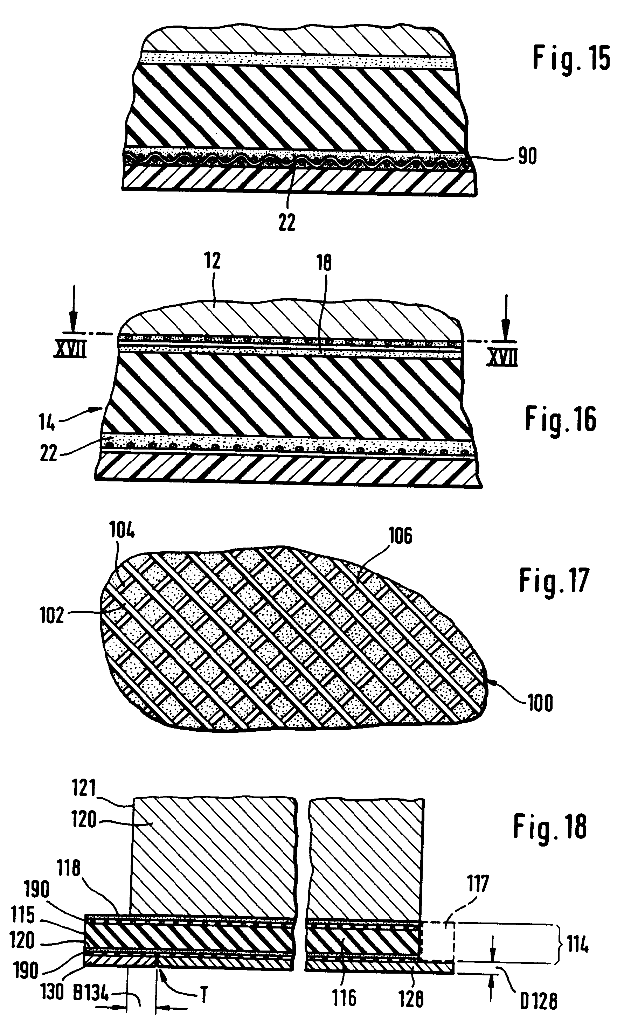

Unter Bezug auf die Figur 15 wird noch eine weitere Ausführungsform des Ausgleichs-Gewichts beschrieben. Diese unterscheidet sich von den Ausführungsformen gemäß Figur 12 und 13 darin, daß eine Netz- bzw. Gewebestruktur 90, die wie in Figur 14 gezeigt ausgeführt sein kann, im Bereich der Klebstoffschicht 22 vorgesehen ist. Auch für diese Ausführungsform gilt, daß die Querschnittsgestaltung der Fäden 94 des Netzes oder Gewebes bzw. Gewebebandes derart an die lichte Maschenweite anzupassen ist, daß sich einerseits eine gute Kraftübertragung vom Gewebe auf die Klebstoffschicht und andererseits eine möglichst geringe Verminderung der Gesamt-Klebefläche ergibt. Dabei hat sich gezeigt, daß bei Vorsehen eines verhältnismäßig grobmaschigen Netzes die Netzstruktur in Form des Gewebes 90 auf die Klebstoffschicht 22 aufgelegt werden kann, ohne dadurch die Festigkeit der Klebeverbindung über Gebühr einzuschränken. Vorzugsweise wird der lichte Querschnitt der Netzstruktur an die Substanz der Klebstoffschicht 22 angepaßt.

Unter Bezug auf die Figuren 16 und 17 wird noch eine weitere bevorzugte Ausführungsformen der Erfindung erläutert. Auch für diese Ausführungsform gilt, daß diejenigen Komponenten, die den zuvor beschriebenen Teilen entsprechen, mit gleichen Bezugszeichen gekennzeichnet sind. Bei dieser Ausführungsform besteht die das Ablösen des Ausgleichs-Gewichts bzw. der Klebeschicht vereinfachende Netzstruktur aus einem Faden- bzw. Faser-Gelege 100, das im Bereich der jeweiligen Klebstoffschichten 18 und 22 vorgesehen ist. Im konkreten Ausführungsbeispiel sind die Faden- bzw. Fasergelege 100 auf die Klebstoffschichten 18, 22 lediglich aufgelegt, wobei sich gezeigt hat, daß sich durch geeignete Abstimmung der Dicke der gekreuzten Fasern bzw. Fäden 102, 104 der Effekt einstellt, daß der jeweilige Klebstoff 18, 22 um das Netz-Gelege herumläuft, so daß auf diese Weise quasi keine Klebe-Kontaktfläche verloren geht.

Die mit 106 bezeichneten Knotenpunkte des netzwerkartigen Faden- bzw. Fasergeleges 100 sind ausreichend zu stabilisieren, was auf verschiedene Art und Weise erfolgen kann, nämlich durch Stoffschluß, Reibschluß, d.h. Kraftschluß, oder Formschluß.

Bei der Ausführungsform gemäß Figur 16 und 17 sorgt die in der Klebstoffschicht 22 vorgesehene Netzstruktur 100 dafür, daß sich das Ausgleichs-Gewicht sehr leicht vom auszuwuchtenden Bauteil abnehmen läßt. Über die Netzstruktur im Bereich der oberen Klebstoffschicht 18 wird das Abtrennen der Klebeschicht 14 vom Metallstreifen 12 vereinfacht, so daß die beiden Bestandteile des Ausgleichs-Gewichts separat einem Recycling-Prozeß zugeführt werden können.

Anstelle der bei der Ausführungsform gemäß Figur 16 und 17 vorgesehenen zwei Netzstrukturen in Form der Faden-bzw. Faser-Gelege ist es auch möglich, mit einer einzigen, möglicherweise mehr als zweiflächigen Netzstruktur zu arbeiten, die dann so gelegt wird, daß sie sowohl beim Ablösen des Ausgleichs-Gewichts von der Oberfläche des auszuwuchtenden Bauteils als auch beim Ablösen der Klebeschicht vom Metallstreifen dafür sorgen kann, daß keine Klebstoff-Rückstände verbleiben. Die Variationsmöglichkeiten der Netzgestaltung, wie sie unter Bezug auf die Ausführungsform gemäß Figur 14 beschrieben wurden, gelten auch bei der Variante gemäß den Figuren 16 und 17.

Schließlich wird anhand der Figur 18 eine weitere Alternative der Ausgestaltung des Ausgleichs-Gewichts beschrieben. Bei dieser Ausführungsform sind die Teile und Abschnitte des Gewichts, die den Bereichen anderer Ausführungsformen entsprechen mit um "100" erhöhten Bezugszeichen versehen. Die Besonderheit dieser Ausführungsform liegt darin, daß die Klebeschicht mit Träger so bezüglich des Metallstreifens 120 angeordnet ist, daß sich bei Verwendung eines gängigen doppelseitigen Klebebandes, das regelmäßig nur mit seitlich bündig abgeschnittener Schutzschicht 128, 130 hergestellt wird, bei einfacher Handhabung ein möglichst geringer Materialverlust ergibt.

Die Klebeschicht 114 besteht aus den reinen Klebstoffschichten 118, 120, in die Verstärkungsfäden 190 eingelegt sind und die zu beiden Seiten des Trägerkörpers 116 vorgesehen sind. Die Probe-Heftfläche befindet sich auf der linken Seite der Figur und ist über die Randfläche 121 des Metallstreifens 120 hinaus verbreitert. Mit einem Innenstands-Maß B134 liegt die Probe-Heftfläche allerdings im Bereich des Metallstreifens 120, damit bereits bei der Heftung des Gewichts eine planparallele Ausrichtung des Gewichts zur Felge erzielbar ist. An der Stelle T ist der Schutzschicht-Streifen 128, 130 voll durchtrennt, es ist aber auch eine Perforation möglich. Der abgedeckte doppelseitige Klebestreifen ist auf der gem. der Figur 18 linken Seite im unbearbeiteten, auf eine vorbestimmte Breite zugeschnittenen Zustand belassen. Auf der rechten Seite ist vom Klebstreifen der Bereich 117 abgetragen worden, so daß eine Anfassung entsteht. Der Materialverlust bei Verwendung eines vollflächig abgedeckten beidseitigen Klebebandes beschränkt sich auf die Fläche 117.

Die Stärke D128 der Schutzstreifen 128, 130 wird vorzugsweise an das Maß B134 und/oder an den beim nach oben Biegen des links seitlich vorstehenden Abschnitts des Klebebandes 116 auftretenden Biegeradius so angepaßt, daß sich der Streifenbereich 130 zwar leicht von der unteren Klebeschicht 120 lösen läßt, aber eine gewisse Haftsicherheit beibehält, die die Handhabung vor der Montage erleichtert.

Ferner ist es von Vorteil, den Grad der Silikonisierung der der Klebeschicht - mit und ohne Faserverstärkung oder Faden-Gelege-Abdeckung - zugewandten Oberfläche der Schutzabdeckung 130 und/oder 128 an die Steifigkeit und/oder den oben angesprochenen Biegeradius anzupassen, damit das Ablösen des Streifens 130 ohne Komplikationen erfolgen kann.

Es ist dann auch nicht erforderlich, mit einer Durchtrennung der Schutzabdeckung 130, 128 zu arbeiten. Vielmehr kann die beim Umbiegen des Randes der Schutzschicht entstehende Verformung dazu genutzt werden, eine Solbruchstelle in einer durchgehenden oder perforierten Deckschicht 128, 130 aufzureißen.

Die Erfindung schafft somit ein Ausgleichs-Gewicht zum Auswuchten von drehenden Bauteilen, insbesondere von Kraftfahrzeug-Reifen, in Form eines Metallstreifens, der auf einer Seite mit einer Klebeschicht versehen ist, die von einer abziehbaren Schutzschicht abgedeckt ist. Damit das Ausgleichsgewicht auch unter Einsatz weniger präzise arbeitender Auswucht-Hilfsmittel wirtschaftlich eingesetzt werden kann, wobei die Lagerhaltung wesentlich vereinfacht sein soll, ist die Schutzschicht in Längsrichtung des Metallstreifens zur separaten Abdeckung einer darunterliegenden zumindest teilweise im Bereich des Metallstreifens liegenden Probe-Heftfläche unterteilt.

## Patentansprüche

1. Ausgleichs-Gewicht zum Auswuchten von drehenden Bauteilen, insbesondere von Kraftfahrzeug-Reifen, in Form eines Metallstreifens (4, 12), der auf einer Seite mit einer Klebeschicht (14; 14′; 48 bis 54; 114) versehen ist, die von einer abziehbaren Schutzschicht (24; 30; 130) abgedeckt ist, **dadurch gekennzeichnet, daß** die Schutzschicht (24) in Längsrichtung des Metallstreifens (20) in zwei separat abziehbare Schutzschicht-Teilstreifen (28, 30), nämlich einen ersten Schutzschicht-Teilstreifen (28) und einen Haupt-Schutzschicht-Teilstreifen (30) zur separaten Abdeckung und Freilegung einer unter dem ersten Schutzschicht-Teilstreifen (28) liegenden Probe-Heftfläche (34) und einer unter dem Haupt-Schutzschicht-Teilstreifen (30) liegenden Haupt-Heftfläche unterteilt ist.

2. Ausgleichs-Gewicht nach Anspruch 1, **dadurch** **gekennzeichnet, daß** die Schutzschicht (24) im Übergangsbereich zur Probe-Heftläche (34) eine Längs-Perforation (26) aufweist.

3. Ausgleichs-Gewicht nach Anspruch 1, **dadurch** **gekennzeichnet, daß** die Schutzschicht (24) im Übergangsbereich zur Probe-Heftfläche (34) eine sich in Längsrichtung erstreckende Soll-Trennstelle (26) aufweist.

4. Ausgleichs-Gewicht nach einem der Ansprüche 1 bis 3, **dadurch gekennzeichnet, daß** die Probe-Heftfläche (34) zwischen 5 und 40 %, vorzugsweise zwischen 5 und 20 % der Gesamt-Klebefläche (B4) ausmacht.

5. Ausgleichs-Gewicht nach einem der Ansprüche 1 bis 4, **dadurch gekennzeichnet, daß** die Schutzschicht (24) auf beiden Längsseiten über die Klebeschicht (14) zur Ausbildung einer Abziehhilfe vorsteht (MV).

6. Ausgleichs-Gewicht nach einem der Ansprüche 1 bis 5, **dadurch gekennzeichnet, daß** die Klebeschicht (14; 44, 46) von einem Acrylharz-Klebstoff (18, 22; 52, 54; 56, 58) gebildet ist, der auf einem Elastomer-Trägerkörper (16; 48; 50) aufgebracht ist.

7. Ausgleichs-Gewicht nach Anspruch 6, **dadurch gekennzeichnet, daß** die Schutzschicht (24; 28, 30; 28′) von einer silikonisierten Schutzfolie gebildet ist, die vorzugsweise aus Papier oder Kunststoff besteht.

8. Ausgleichs-Gewicht nach einem der Ansprüche 1 bis 7, **dadurch gekennzeichnet, daß** der Metallstreifen (20) die Form eines Bandes mit im wesentlichen rechteckigem Querschnitt hat, das quer zur Längsrichtung verlaufende Kerben (8) aufweist, die in vorbestimmtem Abstand zueinander stehen.

9. Ausgleichs-Gewicht nach Anspruch 8, **dadurch gekennzeichnet, daß** die Schutzschicht (24) im Bereich unterhalb der Kerben (8) eine Trennstelle (60) hat.

10. Ausgleichs-Gewicht nach Anspruch 8 oder 9, **dadurch** **gekennzeichnet, daß** die Klebeschicht (14) im Bereich unterhalb der Kerben (8) eine Trennstelle hat.

11. Ausgleichs-Gewicht nach einem der Ansprüche 1 bis 10, **dadurch gekennzeichnet, daß** die Klebeschicht (14′) auf seiten der Probe-Heftfläche (34′) um ein vorbestimmtes Maß (MV14′) über die Längskante (32′) des Metallstreifens (20′) vorsteht.

12. Ausgleichs-Gewicht nach einem der Ansprüche 1 bis 11, **dadurch gekennzeichnet, daß** die Probe-Heftfläche (34) gegenüber der übrigen Klebefläche um ein vorbestimmtes Maß (VE) erhaben ist.

13. Ausgleichs-Gewicht nach Anspruch 12, **dadurch gekennzeichnet, daß** das vorbestimmte Maß (VE) in etwa der Dicke (D28) der Schutzschicht (28) entspricht.

14. Ausgleichs-Gewicht nach Anspruch 11 oder 12, **dadurch gekennzeichnet, daß** der Querschnitt des Metallstreifens (20) im Bereich der Probe-Heftfläche (34) um das vorbestimmte Maß (VE, D82) verstärkt ist, so daß ein nach unten vorstehender, flacher Wulst (82) entsteht.

15. Ausgleichs-Gewicht zum Auswuchten von drehenden Bauteilen, insbesondere von Kraftfahrzeug-Reifen, in Form eines Metallstreifens (4, 12), der auf einer Seite mit einer Klebeschicht (14; 114) versehen ist, die von einer abziehbaren Schutzschicht (30; 130) abgedeckt ist, insbesondere nach einem der Ansprüche 1 bis 14, **dadurch gekennzeichnet, daß** in die Klebeschicht (14; 114) eine das Ablösen des aufgeklebten Metallstreifens (112) ohne Beschädigungen der Klebstoffschicht (14; 114) ermöglichende Netzstruktur (90; 100) aus Fäden oder Fasern integriert ist.

16. Ausgleichs-Gewicht nach Anspruch 15, **dadurch gekennzeichnet, daß** die Netzstruktur (90; 100) im wesentlichen parallel zur Klebefläche (22) verläuft.

17. Ausgleichs-Gewicht nach Anspruch 15 oder 16, wobei die Klebeschicht (14) eine Trägersubstanz, wie z. B. einen Elastomer-Trägerkörper (16) aufweist, **dadurch gekennzeichnet, daß** die Netzstruktur (90) in die Trägersubstanz (16), vorzugsweise im Bereich des äußeren Drittels eingearbeitet ist.

18. Ausgleichs-Gewicht nach einem der Ansprüche 15 bis 17, **dadurch gekennzeichnet, daß** die Netzstruktur (90; 100) im Bereich des Klebstoffs (22; 18) der Klebeschicht (14) nahe der Klebekontaktfläche vorgesehen ist.

19. Ausgleichs-Gewicht nach Anspruch 18, **dadurch gekennzeichnet, daß** die Netzstruktur (90; 100) in die Klebstoffschicht (22; 18) eingebettet ist.

20. Ausgleichs-Gewicht nach einem der Ansprüche 15 bis 19, **dadurch gekennzeichnet, daß** die Netzstruktur von einem Faden- bzw. Faser-Gelege (100) gebildet ist.

21. Ausgleichs-Gewicht nach einem der Ansprüche 15 bis 20, **dadurch gekennzeichnet, daß** die Netzstruktur aus einem Faden- oder Fasergeflecht (90) besteht.

22. Ausgleichs-Gewicht nach einem der Ansprüche 15 bis 21, **dadurch gekennzeichnet, daß** die Netzstruktur (90; 100) aus korrosionsfestem, vorzugsweise hydrophobem bzw. lipophilem Material besteht.

23. Ausgleichs-Gewicht nach einem der Ansprüche 15 bis 22, **dadurch gekennzeichnet, daß** die Fasern und/oder Fäden der Netzstruktur (90; 100) unter einem vorbestimmten Winkel (ALPHA) zur Gewicht-Längserstreckung (96, F) angestellt sind.

24. Ausgleichs-Gewicht nach einem der Ansprüche 15 bis 23, **dadurch gekennzeichnet, daß** die Maschenweite und/oder die Maschenform und/oder der lichte Durchtrittsquerschnitt der Netzstruktur (90; 100) an das Material der Klebstoffschicht und/oder der Klebeschicht (14) angepaßt ist.

## Claims

1. Balancing-weight to balance rotating construction elements, in particular motor-vehicle tyres, in the shape of a metal strip, equipped on one side with an adhesive coat covered by a removable protective layer, characterized by the fact that the protective layer (24) in the longitudinal direction of the metal strip (29) is subdivided with regard to the separate cover of a test-adhesive surface (34) lying under-neath.

2. Balancing-weight according to claim 1, characterized by the fact that the protective layer (24) in the transitional region to the test-adhesive surface (34) presents a longitudinal perforation (26).

3. Balancing-weight according to claim 1, characterized by the fact that the protective layer (24) in the transitional region to the test-adhesive surface (34) presents a nominal separating spot (26) extending in the longitudinal direction.

4. Balancing-weight according to one of the claims 1 to 3, characterized by the fact that the test--adhesive surface (34) constitutes between 5 and 40%, preferrably between 5 and 20%, of the total adhesive surface (B4).

5. Balancing-weight according to one of the claims 1 to 4, characterized by the fact that the protective layer (24) on both longitudinal sides protrudes beyond the adhesive coat (14) to form a removing aid (MV).

6. Balancing-weight according to one of the claims 1 to 5, characterized by the fact that the adhesive coat (14; 44, 46) is formed by an acrylic resin adhesive (18, 22; 52, 54; 56, 58) applied to an elastomeric carrier body (16; 48; 50).

7. Balancing-weight according to claim 6, characterized by the fact that the protective layer (24; 28, 30; 28′) is formed by a siliconized protective sheeting consisting preferrably of paper or synthetic material.

8. Balancing-weight according to one of the claims 1 to 7, characterized by the fact that the metal strip (20) has the shape of a band with an essentially rectangular cross section, presenting notches (8) running crosswise to the longitudinal direction, placed in a predetermined distance from each other.

9. Balancing-weight according to claim 8, characterized by the fact that the protective layer (24) has a separating spot (60) in the region below the notches (8).

10. Balancing-weight according to claim 8 or 9, characterized by the fact that the adhesive coat (14) has a separating spot in the region below the notches (8).

11. Balancing-weight according to one of the claims 1 to 10, characterized by the fact that the adhesive coat (14′) on the side of the test-adhesive surface (24′) protrudes beyond the longitudinal edge (32′) of the metal strip (20′) by a predetermined measure (MV14′).

12. Balancing-weight according to one of the claims 1 to 11, characterized by the fact that the test-adhesive surface (34) is raised by a predetermined measure (VE) compared to the remaining adhesive surface.

13. Balancing-weight according to claim 12, characterized by the fact that the predetermined measure (VE) approximately corresponds to the thickness (D28) of the protective layer (28).

14. Balancing-weight according to claim 11 or 12, characterized by the fact that the cross section of the metal strip (20) is reinforced by a predetermined measure (VE, D82) in the region of the test-adhesive surface (34), in order to create a flat bulge (82) protruding downwards.

15. Balancing-weight to balance rotating construction elements, in particular motor-vehicle tyres, in the shape of a metal strip, equipped on one side with an adhesive coat covered by a removable protective layer, in particular according to one of the claims 1 to 14, characterized by the fact that a net structure (90; 100) of threads or fibers is integrated in the adhesive coat (14).

16. Balancing-weight according to claim 15, characterized by the fact that the net structure (90; 100) for the most part runs parallel to the adhesive surface (22).

17. Balancing-weight according to claim 15 or 16, whereby the adhesive coat (14) presents a carrier substance, as for instance an elastomeric carrier body (16), characterized by the fact that the net structure (90) is worked into the carrier substance (16), preferrably in the regior of the outer third.

18. Balancing-weight according to one of the claims 15 to 17, characterized by the fact that the net structure (90; 100) is provided for in the region of the adhesive (22; 18) of the adhesive coat (14) close to the adhesive contact surface.

19. Balancing-weight according to claim 18, characterized by the fact that the net structure (90; 100) is embedded in the adhesive layer (22; 18).

20. Balancing-weight according to one of the claims 15 to 19, characterized by the fact that the net structure is formed by a thread or fiber sitting (100).

21. Balancing-weight according to one of the claims 15 to 20, characterized by the fact that the net structure is formed by a thread or fiber netting (90).

22. Balancing-weight according to one of the claims 15 to 21, characterized by the fact that the net structure (90; 100) consists of corrosion-proof, preferrably hydrophobic or lipophilic material.

23. Balancing-weight according to one of the claims 15 to 22 characterized by the fact that the threads and/or fibers of the net structure (90; 100) are placed in a predetermined angle (alpha) to the longitudinal extension of the weight (96, F).

24. Balancing-weight according to one of the claims 15 to 23 characterized by the fact that the width and/or the shape of the meshes and/or the inside passage cross section of the net structure (90; 100) is adapted to the material of the adhesive layer and/or the adhesive coat (14).

## Revendications

1. Contrepoids pour équilibrer des éléments rotatifs, en particulier des pneumatiques de véhicules automobiles, sous forme d'une bande métallique qui est pourvue sur un côté d'une couche collante recouverte par une couche de protection pelliculable, caractérisé en ce que la couche de protection (24) est divisée en direction longitudinale de la bande métallique (20) pour recouvrir séparément une surface adhésive d'essai (34) sous-jacente.

2. Contrepoids selon la revendication 1, caractérisé en ce que la couche de protection (24) présente une perforation longitudinale (26) dans la zone de transition vers la surface adhésive d'essai (34).

3. Contrepoids selon la revendication 1, caractérisé en ce que la couche de protection (24) présente une amorce de rupture (26) s'étendant en direction longitudinale dans la zone de transition vers la surface adhésive d'essai (34).

4. Contrepoids selon l'une quelconque des revendications 1 à 3, caractérisé en ce que la surface adhésive d'essai (34) représente entre 5 et 40%, de préférence entre 5 et 20% de la surface de collage totale (B4).

5. Contrepoids selon l'une quelconque des revendications 1 à 4, caractérisé en ce que la couche de protection (24) fait saillie sur les deux côtés longitudinaux au-delà de la couche collante (14) pour former une assistance au pelage (MV).

6. Contrepoids selon l'une quelconque des revendications 1 à 5, caractérisé en ce que la couche collante (14; 44, 46) est formée par une colle de résine acrylique (18, 22; 52, 54; 56, 58) qui est appliquée sur un support d'élastomère (16; 48; 50).

7. Contrepoids selon la revendication 6, caractérisé en ce que la couche de protection (24; 28, 30; 28′) est formée par une feuille de protection traitée au silicone qui est de préférence en papier ou en matière plastique.

8. Contrepoids selon l'une quelconque des revendications 1 à 7, caractérisé en ce que la bande métallique (20) à la forme d'une bande à section sensiblement rectangulaire qui présente transversalement à la direction longitudinale des entailles (8) qui sont à une distance prédéterminée les unes des autres.

9. Contrepoids selon la revendication 8, caractérisé en ce que la couche de protection (24) a un point de séparation (60) dans la zone située au-dessous des entailles (8).

10. Contrepoids selon la revendication 8 ou 9, caractérisé en ce que la couche collante (14) a un point de séparation dans la zone située au-dessous des entailles (8).

11. Contrepoids selon la revendication 1 à 10, caractérisé en ce que la couche collante (14′) fait saillie du côté de la surface adhésive d'essai (34′), sur une dimension prédéterminée (MV14′) au-delà de l'arête longitudinale (32′) de la bande métallique (20′).

12. Contrepoids selon l'une quelconque des revendications 1 à 11, caractérisé en ce que la surface adhésive d'essai (34) est en relief par rapport au reste de la surface de collage, sur une dimension prédéterminée (VE).

13. Contrepoids selon la revendication 12, caractérisé en ce que la dimension prédéterminée (VE) correspond approximativement à l'épaisseur (D28) de la couche de protection (28).

14. Contrepoids selon la revendication 11 ou 12, caractérisé en ce que la section de la bande métallique (20) est renforcée d'une dimension prédéterminée (VE, D82) dans la zone de la surface adhésive d'essai (34) de sorte qu'il se forme un renflement (82) plat faisant saillie vers le bas.

15. Contrepoids pour équilibrer des éléments rotatifs, en particulier des pneumatiques de véhicules automobiles, sous forme d'une bande métallique qui est pourvue sur un côté d'une couche collante recouverte par une couche de protection pelliculable, en particulier selon l'une quelconque des revendications 1 à 14, caractérisé en ce qu'une structure réticulée (90; 100) en fils ou fibres est intégrée à la couche collante (14).

16. Contrepoids selon la revendication 15, caractérisé en ce que la structure réticulée (90; 100) s'étend sensiblement parallèlement à la surface collante (22).

17. Contrepoids selon la revendication 15 ou 16, la couche collante (14) présentant une substance porteuse telle que par exemple un support d'élastomère (16), caractérisé en ce que la structure réticulée (90) est incorporée à la substance porteuse (16), de préférence dans la zone du tiers extérieur.

18. Contrepoids selon l'une quelconque des revendications 15 à 17, caractérisé en ce que la structure réticulée (90; 100) est prévue dans la zone de la colle (22; 18) de la couche collante (14) à proximité de la surface de contact collante.

19. Contrepoids selon la revendication 18, caractérisé en ce que la structure réticulée (90; 100) est enrobée dans la couche de colle (22; 18).

20. Contrepoids selon l'une quelconque des revendications 15 à 19, caractérisé en ce que la structure réticulée est formée par un agencement (100) de fils ou de fibres.

21. Contrepoids selon l'une quelconque des revendications 15 à 20, caractérisé en ce que la structure réticulée est formée par un treillis (90) de fils ou de fibres.

22. Contrepoids selon l'une quelconque des revendications 15 à 21, caractérisé en ce que la structure réticulée (90; 100) est en un matériau résistant à la corrosion, de préférence hydrophobe ou lipophile.

23. Contrepoids selon l'une quelconque des revendications 15 à 22, caractérisé en ce que les fibres et/ou les fils de la structure réticulée (90; 100) sont mis en place sous un angle (ALPHA) prédéterminé pour s'étirer longitudinalement sous l'effet du poids (96, F).

24. Contrepoids selon l'une quelconque des revendications 15 à 23, caractérisé en ce que la largeur des mailles et/ou la forme des mailles et/ou la section de passage libre de la structure réticulée (90; 100) est adaptée au matériau de la couche de colle et/ou de la couche collante (14).
